(19) Europäisches Patentamt
European Patent Office
Office européen des brevets

(11) Veröffentlichungsnummer: **0 084 108**
**B1**

# (12) EUROPÄISCHE PATENTSCHRIFT

(45) Veröffentlichungstag der Patentschrift: **26.11.86**

(51) Int. Cl.⁴: **C 08 L 77/00, C 08 K 5/18 // C08L77/02, C08L77/06**

(21) Anmeldenummer: **82111189.5**

(22) Anmeldetag: **03.12.82**

(54) **Stabilisierte Polyamide.**

(30) Priorität: **16.12.81 DE 3149763**

(43) Veröffentlichungstag der Anmeldung: **27.07.83 Patentblatt 83/30**

(45) Bekanntmachung des Hinweises auf die Patenterteilung: **26.11.86 Patentblatt 86/48**

(84) Benannte Vertragsstaaten: **CH DE FR GB IT LI NL**

(56) Entgegenhaltungen:
**DD-A-84 486**
**DE-B-1 123 103**
**DE-C-1 099 725**
**DE-C-1 154 938**
**GB-A-1 530 258**

(73) Patentinhaber: **BAYER AG, Konzernverwaltung RP Patentabteilung, D-5090 Leverkusen 1 Bayerwerk (DE)**

(72) Erfinder: **Brassat, Bert, Dr., Bethelstrasse 24, D-4150 Krefeld (DE)**
Erfinder: **Buysch, Hans-Josef, Dr., Brandenburger Strasse 28, D-4150 Krefeld (DE)**
Erfinder: **Haupt, Heinrich, Dr., Bodelschwinghstrasse 15, D-4150 Krefeld (DE)**
Erfinder: **Hermann, Karl Heinz, Dr., Scheiblerstrasse 111, D-4150 Krefeld (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 084 108 B1

LIBER, STOCKHOLM 1986

**Beschreibung**

Gegenstand der vorliegenden Erfindung sind stabilisierte Polyamide, die Diphenylaminverbindungen als Stabilisatoren enthalten.

Es ist bekannt, Polyamide durch Zusatz von Kupferverbindungen in Kombination mit Halogenverbindungen gegen thermischen und oxidativen Abbau zu stabilisieren.

Dabei werden aber in der Regel wesentliche elektrische Eigenschaften der Polyamide, wie Oberflächenwiderstand, spez. Durchgangswiderstand, dielektrischer Verlustfaktor, Kriechstromfestigkeit und elektrische Korrosionswirkung, erheblich verschlechtert.

Ferner können ionische Stabilisatoren in Folge ihrer Wasserlöslichkeit häufig ausblühen und dabei Fehlstellen, wie Flecken oder Verfärbungen auf der Oberfläche von Polyamidartikeln hervorrufen. Schließlich sind manche Cu-Stabilisatoren mit einigen Farbpigmenten, besonders schwefelhaltigen, unverträglich und können so die Farbe in unerwünschter Weise verändern.

Man hat daher schon nichtionische Stabilisatoren wie aromatische Amino- und Hydroxyverbindungen eingesetzt, die die genannten Nachteile nicht aufweisen. Diese phenolischen Verbindungen haben jedoch eine zu geringe bzw. nur mäßige Stabilisatorwirkung, und die aromatischen Aminoverbindungen verursachen häufig schon beim Einarbeiten ins Polyamid eine starke Verfärbung.

Ziel der vorliegenden Erfindung war es daher, hochwirksame, nichtionische, nicht oder nur wenig verfärbende Stabilisatoren auf der Basis aromatischer Amine für Polyamide zu entwickeln.

Es ist bekannt, aromatische Amine als Stabilisatoren gegen den thermooxidativen Abbau von Polyamiden einzusetzen. In dieser Verbindungsklasse, gibt es recht wirksame Substanzen. Vorgeschlagen wurden z.B. Keton-, vorzugsweise Aceton-Diphenylamin-Kondensate, in denen als Hauptprodukt 10,10-Dimethylacridin enthalten ist (USP 3 003 995), p-Phenylendiamine der Struktur

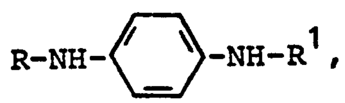

wobei R = Phenyl oder Naphthyl bedeutet und $R^1$ für eine $C_5$-$C_{15}$-cycloaliphatische Gruppe steht (DAS 1 099 725); Kondensate von Formaldehyd mit aromatischen Aminen der Formel Ar-NH-R und

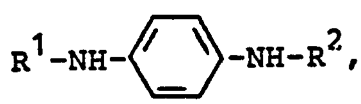

worin Ar einen Aryl- und R einen aromatischen, aliphatischen oder cycloaliphatischen Rest, $R^1$ und $R^2$, gleiche oder verschiedene, aromatische, aliphatische oder cycloaliphatische Reste darstellen (DAS 1 123 103).

Empfohlen werden ferner auch Nitroanilin, Benzidin, p-Phenylen-bis-β-naphthylamin und N-Phenyl-α- oder β-naphthylamin (J. Voigt: "Die Stabilisierung der Kunststoffe gegen Licht und Wärme", Springer Verl. 1966, S. 455 ff).

Diese Produkte wirken oft als gute Stabilisatoren, weisen aber auch gravierende Nachteile auf, so sind die letztgenannten Substanzen nach heutigen toxikologischen Erkenntnissen kaum noch als Polyamidstabilisatoren einsetzbar.

Außerdem läuft in der Regel beim Einsatz aromatischer Amine zu einer wirksamen Stabilisierung eine mehr oder weniger starke Verfärbung des Polyamids einher, die entweder direkt vom Stabilisator, vom Einarbeiten in das Polyamid oder von der Alterung des fertigen Polyamidteils herrührt. In jedem Fall beeinträchtigt dies sowohl die Anwendungsbreite als auch die Einfärbungsmöglichekeiten von Polyamidmaterialien erhblich. Man sucht daher nach aromatischen Aminen, die keine oder wenig Verfärbung verursachen.

Ein solches Produkt ist Dioctyl-diphenylamin, das zwar wenig Verfärbung hervoruft, aber dafür auch nur eine geringe Stabilisatorwirkung zeigt.

Monomere Stabilisatoren können außerdem an die Oberfläche des Formteils migrieren.

Daher ist empfohlen worden, Stabilisatoren mit höheren Molgewichten, z.B. Kondensationsprodukte von aromatischen Aminen mit Formaldehyd (DAS 1 123 103) oder Kondensationsprodukte von Diphenylamin mit Aceton (Flexamin (R), DAS 1 152 252), einzusetzen. Aber auch für diese Produkte trifft die obige Feststellung zu, daß eine hohe Wirksamkeit als Stabilisator oft mit einer starken Verfärbungsneigung einhergeht.

Es wurde nun gefunden, daß Polyamide sehr wirksam gegen thermooxidativen Abbau stabilisiert werden können und kaum Verfärbungen zeigen, wenn ihnen 0,02 - 5 Gew.-%, bezogen auf Polyamid, Diphenylaminverbindungen der folgenden allgemeinen Formel 1 zugesetzt werden,

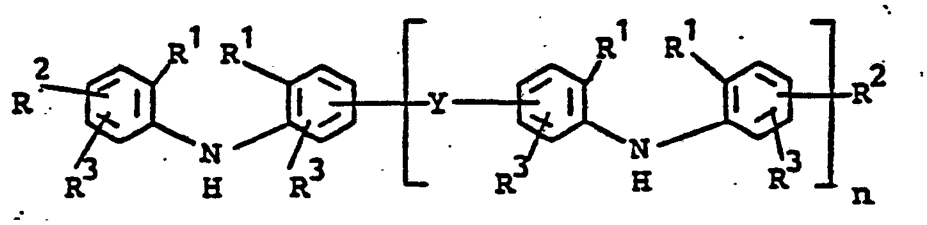 (I)

in der
$R^1$ und $R^3$, gleich oder verschieden, Wasserstoff, eine $CH_3$-, $C_2H_5$- oder Isopropylgruppe , $R^1$ vorzugsweise H oder $C_2H_5$, R vorzugsweise H bedeuten und, wobei $R^3$ in o-, m- und p-Stellung zum N-Atom steht, $R^2$ für Wasserstoff, eine $C_4$-$C_{12}$-Alkyl-, $C_7$-$C_{12}$-Aralkyl-oder $C_5$-$C_{12}$-Cycloalkylgruppe vorzugsweise für Wasserstoff, einen Benzyl-, Styryl-,α,-Methylstyryl-, tert.-Butyl-, tert.-Amyl-, Isononyl-, Cyclohexyl-, Methylcyclohexylrest oder einen der folgenden Reste

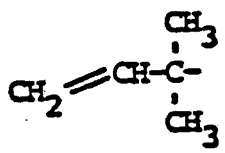, 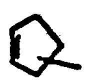, 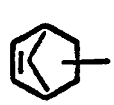, 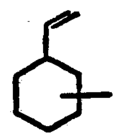, 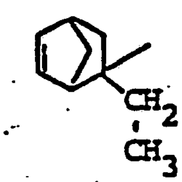

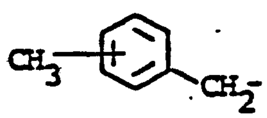, 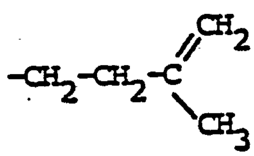, 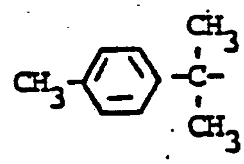,

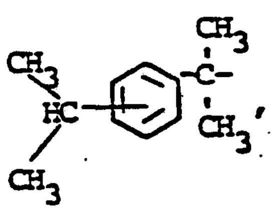, 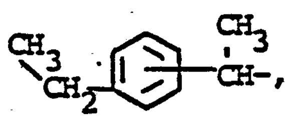, 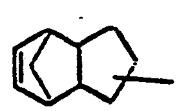, 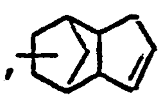

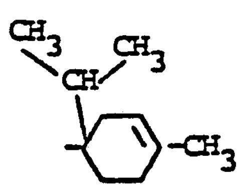, 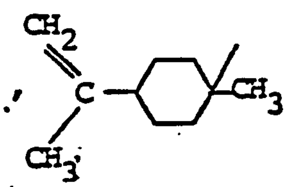, 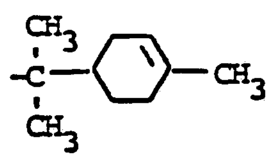

und in o- oder p-Stellung zum N-Atom steht,
n eine ganze Zahl von 1-29, vorzugsweise 1-19 darstellt, besonders bevorzugt 1-12 und
Y für einen Rest

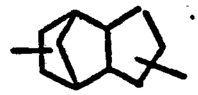 , 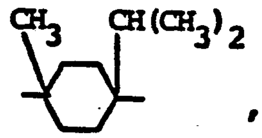 , 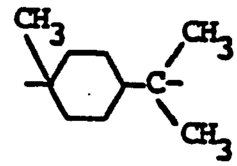 ,

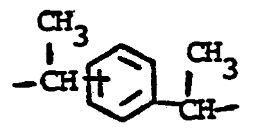 , 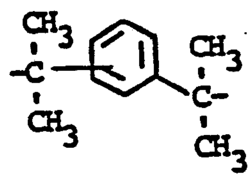 , 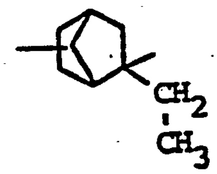

oder bis zu 50 Mol-% für $-CH_2-$ steht.

Diese Stabilisatoren sind aufgrund ihres Molgewichtes weitgehend migrationsfest im Sinne der DAS 1 123 103.

Die erfindungsgemäß ausgerüsteten Polyamide zeigen hohe Resistenz gegen thermooxidativen Abbau und sehr geringe Verfärbungsneigung.

Die erfindungsgemäß einzusetzenden Stabilisatoren werden hergestellt durch Umsetzung von Diphenylamin und/ oder Diphenylaminderivaten der Struktur II,

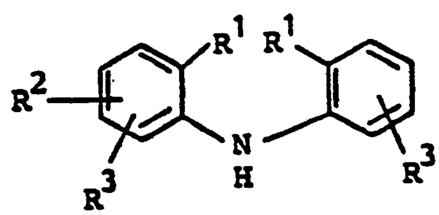 (II)

in der die Reste die vorstehend beschriebene Bedeutung haben, mit bifunktionellen Verbindungen der Formeln

Hal-Y-Hal (Hal = Halogen)

$R^3O$-Y-OR3 oder

$R^3COO$-Y-$OCOR^3$,

worin Y die oben angegebene Bedeutung hat,

bzw. aus diesen durch Abspaltung des Restes HOH, HOR , $HOCOR^3$ oder H Hal sich bildenden Olefinen in Gegenwart von starken Säuren mit einem $pk_s$-Wert kleiner als 2 bei Temperaturen zwischen 50 und 300°C, vorzugsweise 120-250°C, wobei der Rest $R^2$ (ungleich H) vor, während oder nach der obigen Umsetzung eingeführt werden kann.

Die den Verknüpfungseinheit Y zugrundeliegenden Verbindungen können allein oder als Gemische eingesetzt werden.

Der Rest $R^2$ wird entweder während der oben beschriebenen Umsetzung (ebenfalls in ortho- oder para-Stellung) durch Anwendung eines Überschusses der zugrundeliegenden alkylierenden Verbindung eingeführt oder man kann ihn auch nachträglich einführen, indem man Substanzen der Formel 1, die an der Stelle $R^2$ noch Wasserstoff besitzen, mit einer entsprechenden alkylierenden Verbindung wie Styrol, α-Methylstyrol, Benzylalkohol, Cyclohexen, Isononylen, Isobutylen unter den oben beschriebenen Synthesebedingungen reagieren läßt. Oder man läßt entsprechend dem angestrebten Wert von n eine Verbindung, die den Rest $R^2$ schon besitzt, im gewünschten Molverhältnis reagieren, z.B. wird 1 Mol der Verbindung

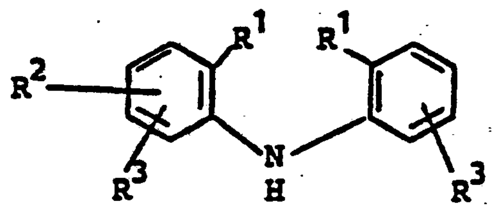

($R^2$ ungleich H)

für den Fall, daß n im Durchschnitt 3 sein soll, pro Mol eines aromatischen Amins mit $R^2$ = H eingesetzt.

Das aromatische Amin und das Verknüpfungsreagenz werden in einem Molverhältnis von 5:1 bis 1:5, vorzugsweise 2:1 bis 1:2, bevorzugt 1,5:1 bis 1:1,5, umgesetzt. Man kann aber auch andere Molverhältnisse wählen. Überschüssiges Ausgangsmaterial kann bei der Aufarbeitung destillativ entfernt werden.

Die Umsetzung von gegebenenfalls substituiertem Diphenylamin mit den zugrundeliegenden Substanzen erfolgt bei Temperaturen zwischen 50 und 300°C, vorzugsweise 120-250°C in Gegenwart von sauren Katalysatoren. Saure Katalysatoren im Sinne der Erfindung sind starke Säuren mit einem in Wasser gemessenen pK-Wert kleiner als 2, also starke Protonsäuren wie Chlorwasserstoff, Bromwasserstoff, Schwefelsäure, Sulfonsäure, p-Toluolsulfonsäure, Phosphorsäure, phosphorige Säure, Trifluoressigsäure, ferner Lewissäuren wie Aluminiumchlorid, Zinkchlorid, Eisen-III-chlorid, Titantetrachlorid, Bortrifluorid, Antimonpentachlorid und Addukte solcher Lewissäuren, wie $BF_3$-Etherat, $BF_3$-Hydrat, Ionenaustauscher auf der Basis von vernetzten sulfonierten polystyrolen und säureaktivierte Tonerden auf der Basis von Bentonit und Montmorillonit.

Diese Katalysatoren werden in Mengen von 0,1-20 Gew.-%, vorzugsweise 0,2-10 Gew.-%, bezogen auf das Reaktionsgemisch, eingesetzt. Sie können nach Durchführung der Reaktion durch Neutralisation und Auswaschen oder durch Filtration entfernt werden. Die Reaktion kann in Gegenwart oder Abwesenheit von Verdünnungs- und Lösemitteln durchgeführt werden. Geeignete Lösemittel sind gegenüber den Reaktionspartnern inert und müssen leicht abzutrennen sein. Geeignet sind beispielsweise aliphatische und aromatische Kohlenwasserstoffe wie Dekalin, Benzin, Benzol, Toluol, Xylol, Cumol, Tetralin, Halogenaromaten wie Chlorbenzol, Dichlorbenzol, Brombenzol und Ether wie Dioxan und Anisol.

Die Durchführung der Reaktion erfolgt in der Regel so, daß man das aromatische Amin, das gegebenenfalls in Lösung gebracht ist, nach Zugabe des Katalysators auf die Reaktionstemperatur bringt, sukzessive mit der alkylierenden Verbindung versetzt und dabei das gegebenenfalls sich abspaltende produkt wie Wasser oder Alkohol ab destilliert. Eine Aufarbeitung der Reaktionsprodukte ist häufig nicht erforderlich. Man kann jedoch, wie beschrieben, den Katalysator entfernen, flüchtige Bestandteile abdestillieren und das Reaktionsprodukt als Sumpfprodukt durch Ausfällen oder in besonderen Fällen durch Auskristallisieren aus geeigneten Lösungsmitteln isolieren.

Mit den erfindungsgemäßen Stabilisatoren können synthetische Polyamide, wie sie durch Polykondensation von Diaminen mit Dicarbonsäuren, durch Polymerisation von Lactamen oder durch Polykondensation von Aminocarbonsäuren erhalten werden, stabilisiert werden. Bevorzugt werden aliphatische Polyamide, insbesondere solche aus Adipinsäure und Hexamethylendiamin oder aus Caprolactam bzw. solche Mischpolyamide, in denen die letztgenannten Komponenten die Hauptbestandteile darstellen, stabilisiert.

Die erfindungsgemäßen Stabilisatoren werden in Mengen von 0,02 - 5 Gew.-%, bevorzugt 0,05 - 2 Gew.-%, besonders bevorzugt 0,1 - 1,5 Gew.-%, bezogen auf das zu stabilisierende Polyamid, eingesetzt. Die Einarbeitung kann sowohl vor oder während der Polymerisation als auch anschließend erfolgen, wobei die Stabilisatoren in Substanz oder als Lösung in einem inerten Lösungsmittel oder einem der Polyamid bildenden Ausgangsstoffe oder als Konzentrat in einem geeigneten Polymeren, bevorzugt in Polyamid zum Einsatz kommen. Die Einarbeitung erfolgt bevorzugt in die Polyamidschmelze unter Verwendung bekannter Mischvorrichtungen, wie Extrudern, Knetern, statischen Mischern und Rührern. Zusätzlich können den Polyamiden verschiedene üblicherweise verwendete Zuschläge unterschiedlicher Art wie Gleit- und Entformungsmittel, Nucleierungsmittel, Pigmente, Farbstoffe, verstärkende oder nicht verstärkende Füllstoffe wie Mineralfasern, Glas- und Asbestfasern, Mikrokugeln aus Glas, Talkum, Siliciumoxid oder Glimmer, Antistatika, Weichmachern und UV-Stabilisatoren in bekannten Mengen beigegeben werden.

Die nach dem erfindungsgemäßen Verfahren stabilisierten Polyamide eignen sich hervorragend für die Herstellung von technischer Seide für Fischnetze, Treibriemen, Förderbändern, Reifencord oder Formkörpern, die einer thermischen Belastung bei freiem Zutritt von Luft oder Sauerstoff ausgesetzt sind.

**Herstellungsbeispiele für die Stabilisatoren**

**Beispiel 1**

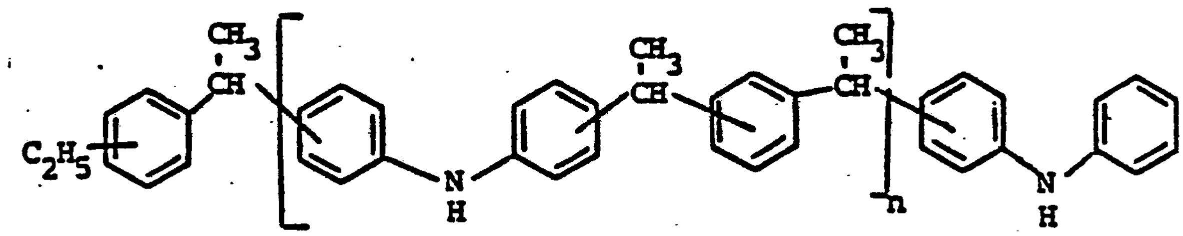

507 g (3 Mol) Diphenylamin und 10 g säureaktivierter Tonerde (Tonsil ® Optimum) werden unter Rühren und Stickstoff auf 200-220°C aufgeheizt und in 4 h tropfenweise mit 217 g technischem Divinylbenzol (bestehend aus 61 % m- und p-Divinylbenzol und 39 % Ethylvinylbenzol) versetzt und noch 1 h bei 220°C gehalten. Noch heiß wird unter Stickstoff abgedrückt, der Filterkuchen mit heißem Xylol gewaschen und abgedrückt. Die vereinigten Filtrate werden eingedampft und bis zu einer Sumpftemperatur von 190°C bei 15 mbar von flüchtigen Bestandteilen befreit. Man erhält die oben dargestellte Verbindung als hellbraunes hochviskoses Harz (710 g).

Nach gelchromatographischer Untersuchung beträgt das max. Molgewicht ca. 1800.

**Beispiel 2**

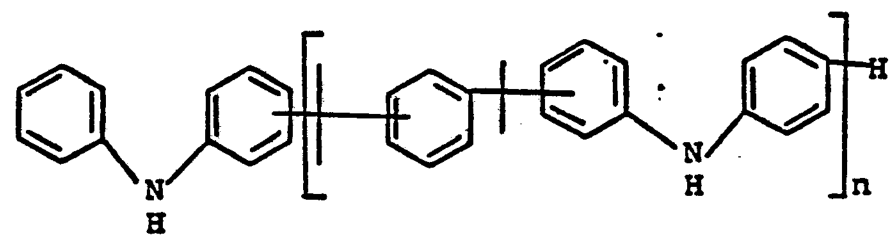

Ein Gemisch von 338 g (2 Mol) Diphenylamin, 194 g (1 Mol) α, α,-Dihydroxy-m-/p-diisopropylbenzol (Molverhältnis 3:2) und 10 g säureaktivierter Tonerde wird aufgeheizt unter Stickstoff und Rühren. Ab 120-125°C Sumpftemperatur geht azeotrop Wasser über, das bei laufend steigender Temperatur abdestilliert wird. Schließlich hält man noch 3 h bei 180°C. Nach Abkühlen auf 100° wird mit Toluol verdünnt und heiß abgedrückt. Nach Waschen des Filterkuchens und Eindampfen der vereinigten Filtrate bis zu einer Sumpftemperatur von 190° bei 15 mbar verbleiben 480 g der Titelverbindung als braunes Weichharz.

**Beispiel 3**

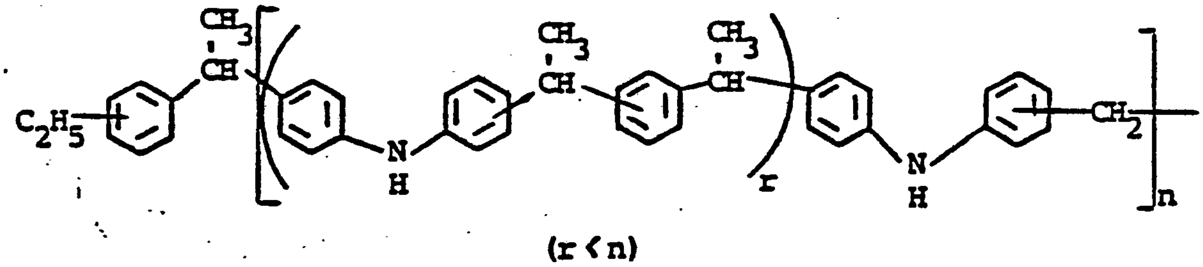

(r < n)

100 g der Verbindung aus Beispiel 1 werden unter Stickstoff und Rühren in Isopropanol gelöst, mit 3 ml konzentrierter Salzsäure rückfließend erhitzt und 12 ml 35 %iges Formalin zugetropft. Der ausfallende Niederschlag wird durch Zugabe von Xylol in Lösung gebracht. Man kocht noch 2 h unter Rückfluß, trennt die Phasen, wäscht die organische mit überschüssiger verdünnter Natronlauge, 3 x mit Wasser, filtriert und dampft die organische Phase bis zu einer Sumpftemperatur von 160° bei 20 mbar ein. Man erhält ein hochviskoses braunes Harz, das beim Abkühlen spröde wird (102 g).

**Beispiel 4**

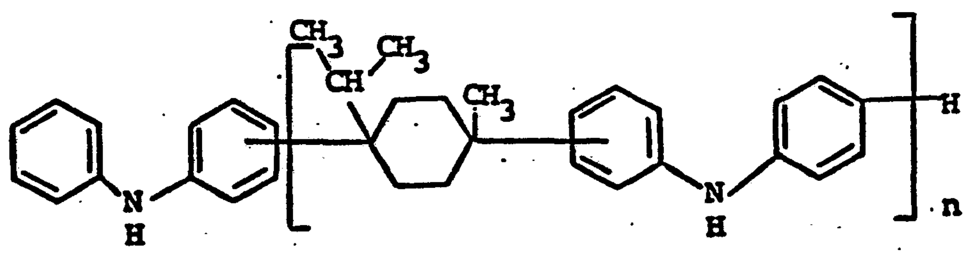

Zu einem Gemisch von 169 g (1 Mol) Diphenylamin und 20 g säureaktivierter Tonerde werden bei 175-180°C in 2 h unter Rühren und Stickstoff 136 g (1 Mol) Limonen zugetropft. Man hält noch 2 h bei 190°C, verdünnt mit Xylol, filtriert und dampft ein bis 190° im Sumpf bei 10 mbar. Es verbleiben 302 g eines schwach gelben Harzes. Molgewicht bis ca. 2000 (gelchromatographisch bestimmt).

**Beispiel 5**

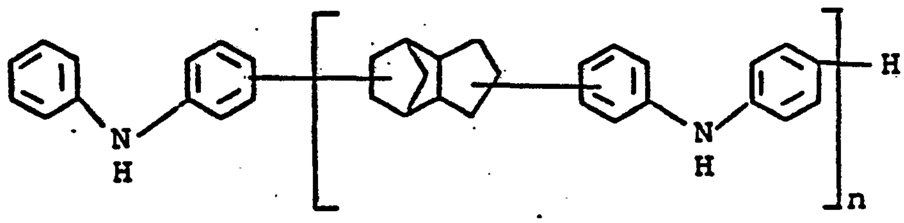

Beispiel 4 wird wiederholt, aber statt 136 g Limonen werden 132 g (1 Mol) Dicyclopentadien eingesetzt. Man erhält 295 g eines braunen Harzes.

**Beispiel 6**

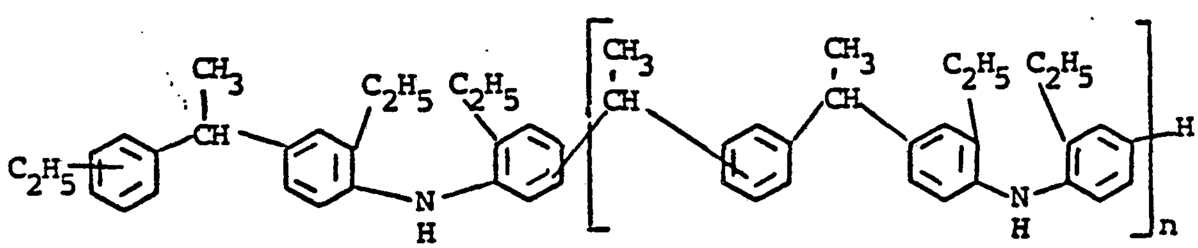

113 g 2,2'-Diethyldiphenylamin und 5 g säureaktivierte Tonerde (Tonsil Optimum) werden unter Stickstoff und Rühren auf 140-145°C gebracht und tropfenweise mit 81 g techn. Divinylbenzol (s. Beispiel 1) in 1 h versetzt. Man hält 2,5 h bei 140°, verdünnt mit Xylol, filtriert und dampft ein. Man erhält ein schwachbraunes Harz (165 g).

**Beispiel 7**

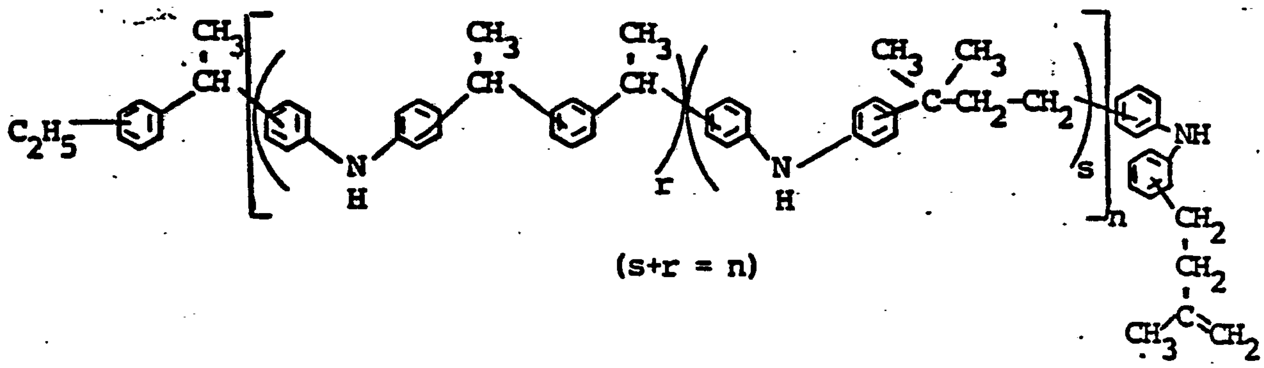

(s+r = n)

Zu 100 g des Produktes aus Beispiel 1 und 3 g säureaktivierter Tonerde in 100 g o-Dichlorbenzol werden unter Rühren und Stickstoff bei 180° 10 g Isopren mit Unterbrechungen über 4 h zugetropft. Nach weiteren 30 Minuten wird filtriert und bis 180°/10 mbar im Sumpf eingedampft. Es bleiben 108 g hellbraunes Harz. Molekulargewicht bis ca. 2500 (Gelchromatographie).

**Beispiel 8**

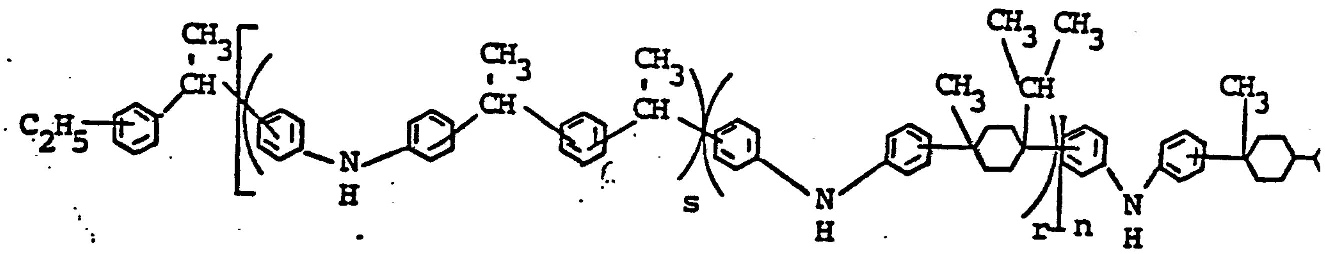

(s+r = n)

Beispiel 7 wird wiederholt, aber statt Isopren werden 30g Limonen in 1 h zugetropft noch 2 h bei 180° gerührt. Nach Aufarbeitung erhält man 120 g sprödes braunes Harz. Molekulargewicht bis etwa 2500 (Gelchromatographie).

**Beispiel 9**

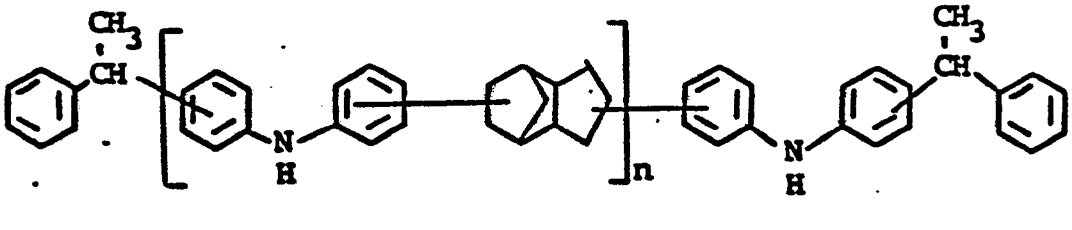

100 g des Produktes aus Beispiel 5 und 5 g säureaktivierte Tonerde werden bei 150° unter Rühren und Stickstoff in 30 Min. mit 50 g Styrol tropfenweise versetzt und noch 3 h bei 150° gehalten. Nach Filtrieren und Eindampfen bis 170°/20 mbar im Sumpf bleiben 124 g eines hellbraunen Harzes.

**Beispiel 10**

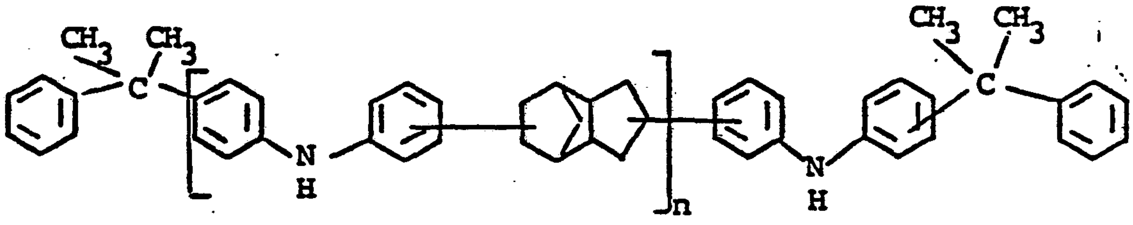

Beispiel 9 wird wiederholt, aber statt Styrol werden 50 g α ;Methylstyrol eingesetzt. Man erhält 118 g eines hellbraunen spröden Harzes.

**Beispiel 11**

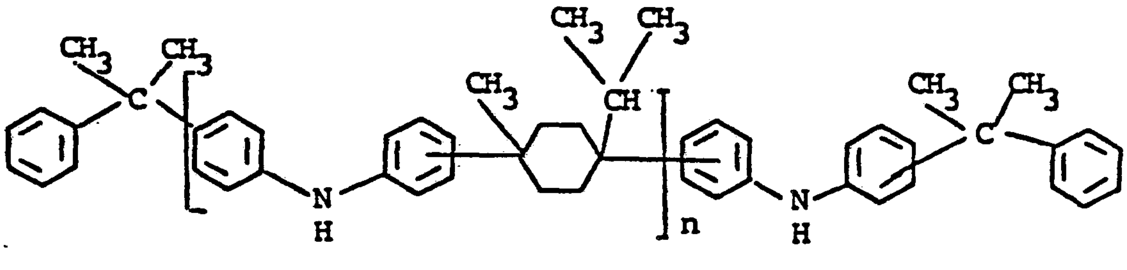

100 g des Produktes aus Beispiel 4 werden mit 5 g säureaktivierter Tonerde unter Rühren und Stickstoff auf 150° gebracht und dazu in 30 Min. 50 g α-Methylstyrol getropft Nach, weiteren 2-3 h bei 150° wird heiß durch eine Drucknutsche filtriert und bis 190°/15 mbar im Sumpf eingedampft. Man erhält 135 g eines gelben spröden Harzes.

**Beispiel 12**

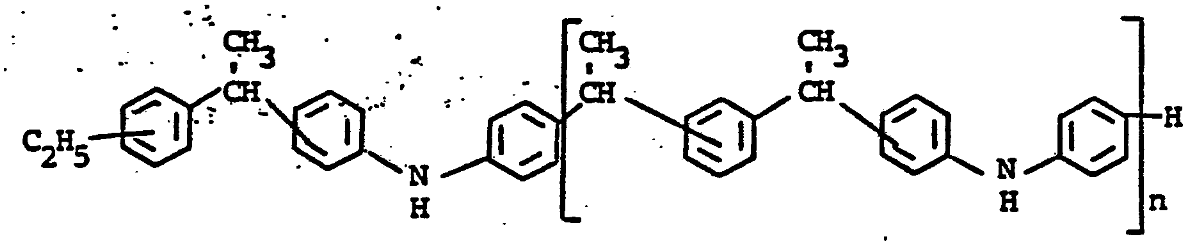

338 g (2 Mol) Diphenylamin und 10 g säureaktivierte Tonerde werden unter Stickstoff und Rühren auf 200° gebracht und bei der Temperatur 217 g techn. Divinylbenzol (s. Beispiel 1) in 4 h zugetropft. Man hält noch 1 h bei 200°, verdünnt mit Xylol, filtriert durch eine beheizte Drucknutsche und dampft das klare Filtrat bis zu einer Sumpftemperatur von 180° bei 20 mbar ein. Man erhält 538 g eines gelbbraunen Harzes.

**Beispiel 13**

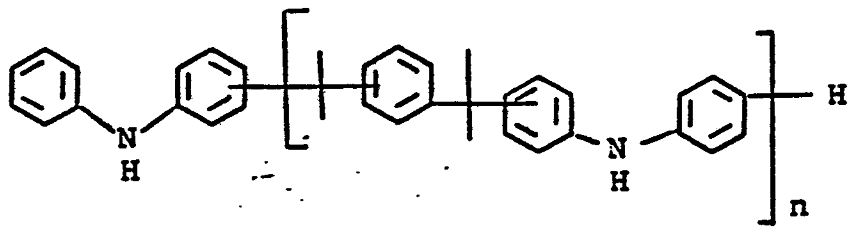

845 g (5 Mol) Diphenylamin und 30 g säureaktivierte Bleicherde (Tonsil Opt.) werden unter $N_2$, und Rühren ausgeschmolzen (70°), mit 194 g (1 Mol) α,α,-Dihydroxy-m/p-diisopropylbenzol (Molverhältnis ca. 4:3) versetzt und langsam weiter aufgeheizt, wobei ab 110-115° Wasser abdestilliert. Nach ca. 3 h ist eine Temperatur von 165° erreicht und das gesamte Wasser übergegangen. Man hält noch 2 h bei 180°C, filtriert durch eine Drucknutsche und destilliert vom klaren Filtrat überschüssiges Diphenylamin bei 170°/5-8 mbar im Sumpf ab. Als Rückstand bleibt die Titelverbindung, ein klares gelbes bis hellbraunes Hartharz (472 g).

**Beispiel 14**

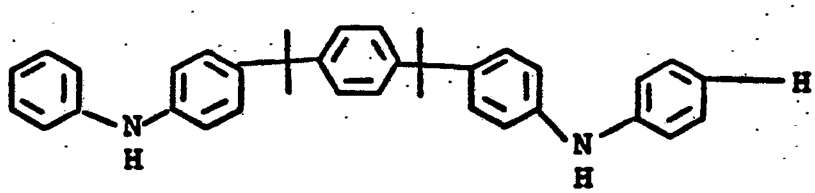

1352 g (8 Mol) Diphenylamin und 50 g säureaktivierte Tonerde werden unter $N_2$ und Rühren auf 100° gebracht und dazu 194 g (1 Mol) α,α,-Dihydroxy-p-diisopropylbenzol zugegeben. Man erhitzt bis 150°, wobei das Reaktionswasser abdestilliert. Man hält noch 1 h bei 150°, erhitzt für 30 Min. auf 170°, filtriert durch eine Drucknutsche und destilliert aus dem klaren Filtrat bei 1-2 mbar überschüssiges Diphenylamin ab. Der Sumpf wird in heißem Xylol aufgenommen. Beim Erkalten erhält man ein kristallines Produkt vom Schmp. 170-180°.

**Beispiel 15**

(Vergleich)

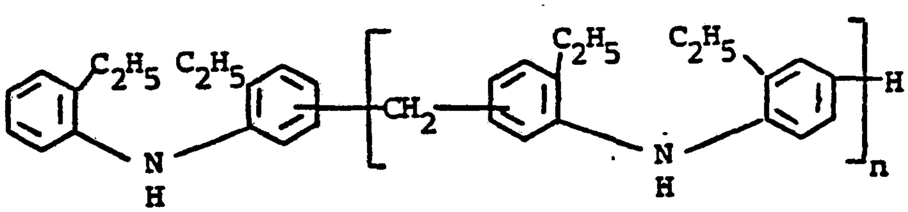

Zu 225 g (1 Mol) 2,2'-Diethyl-diphenylamin, 78 g (0,9 Mol) 35 %iges Formalin und 150 ml Xylol werden unter Stickstoff und Rühren 50 g (0,5 Mol) konz. Salzsäure bei 80-90° in 30 Min. zugetropft. Das Gemisch wird bei 98-100° unter Auskreisen von Wasser erhitzt und schließlich noch weitere 7 h unter laufender Temperatursteigerung bis 170°. Man verdünnt mit Xylol, neutralisiert die Salzsäure mit Natronlauge, trennt die Phasen, wäscht die organische mehrmals mit Wasser und dampft sie schließlich bis 180°/ 25 mbar im Sumpf ein. Man erhält die Titelverbindung als hellbraunes Harz (203 g).

**Beispiel 16**

(Vergleichsversuch nach DAS 1 123 103)

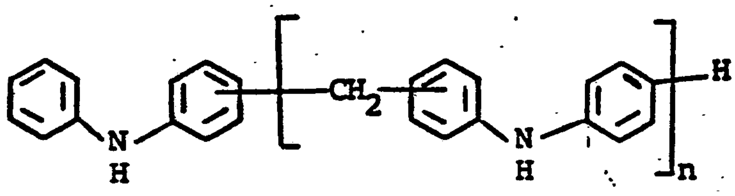

169 g (1 Mol) Diphenylamin werden in 300 ml Toluol/Butanol (1/1) gelöst und auf 40° erwärmt. Unter Rühren und Stickstoff werden 50 g (0,5 Mol) konz. Salzsäure in 30 Min. zugetropft und anschließend in weiteren 30 Min. 75 g (0,87 Mol) 35 %iges Formalin. Diese Mischung läßt man 6-7 h bei 88-90° rühren.

Man neutralisiert mit Natronlauge, trennt die Phasen, wäscht die organische mit Wasser salzfrei und dampft sie bis zu einer Sumpftemperatur von 170° bei 25 mbar ein. Man erhält 180 g eines braunen Harzes.

**Beispiel 17**

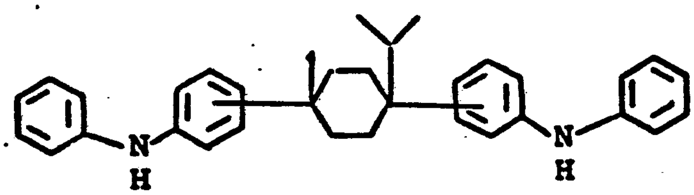

Zu einem Gemisch von 592 g (3,5 Mol) Diphenylamin und 20 g säureaktivierte Bleicherde (Tonsil Optimum) tropft man unter Rühren und Stickstoff in 1 Std. 102 g (0,75 Mol) Limonen hinzu, erhitzt dann für 5 h auf 180° und 6 h auf 200°. Nach Filtration über eine beheizte Drucknutsche wird destilliert. Man erhält 165 g einer bei 280°-295° C/ 0,2 mbar übergehenden Fraktion, ein sprödes gelbliches Harz, das im wesentlichen obiger Formel entspricht.

**Prüfung der Stabilisatorwirkung im unverstärkten Polyamid-6**

Zur Prüfung der Stabilisatorwirkung wurde die zu prüfende Substanz in einer Konzentration von 0,5 Gew.-% durch einen Extruderdurchgang homogen in 6-Polyamid ($\eta_{rel} = 4,0$) eingearbeitet. Das so stabilisierte Material wurde zu Normkleinstäben verspritzt und einer Wärmealterung unter Luftzutritt bei 150 ± 0,5° unterworfen. Nach 1, 2, 4, 8 usw. Tagen wurden jeweils 8 Normkleinstäbe entnommen und nach zweistündiger Abkühlung im Exsiccator auf Schlagzähigkeit nach DIN 53 453 untersucht. Die Prüfung gilt als bestanden, wenn mindestens die Hälfte der Prüfkörper nicht gebrochen ist oder wenn die durchschnittliche Schlagzähigkeit der gebrochenen Stäbe oberhalb 36 kJ/m² liegt. Die Bewertung der Stabilisatorwirkung geschieht nach einer Stufeneinteilung entsprechend der folgenden Tabelle:

| Wärmealterungszeit bis zum Nicht-Bestehen der Schlagprüfung | 1 | 2 | 4 | 8 | 16 etc. Tagen |
|---|---|---|---|---|---|
| Wirksamkeitsstufe des Stabilisators | 0 | 1 | 2 | 3 | 4 |

Die Prüfungsergebnisse der erfindungsgemäßen Stabilisatoren finden sich in Tabelle I, die der Vergleichsprodukte in Tabelle II.

**Tabelle I**

Wirkung der erfindungsgemäßen Stabilisatoren in 6-Polyamid

| Stabilisator nach Bsp. | Wirksamkeitsstufe | Verfärbung |
|---|---|---|
| 1 | 4 | gering |
| 2 | 4 | sehr gering |
| 3 | 4 | gering |
| 4 | 3-4 | gering |
| 5 | 3-4 | schwach gelblich |
| 6 | 4 | sehr gering |
| ohne | 0 | keine |
| 12 | 4 | sehr schwach |
| 13 | 4-5 | kaum |
| 14 | 4-5 | keine |
| 15 | 5 | keine |

**Tabelle II**

Wirkung der Vergleichsprodukte in 6-Polyamid

| Stabilisator | Wirksamkeitsstufe | Verfärung |
| --- | --- | --- |
| Carbazol 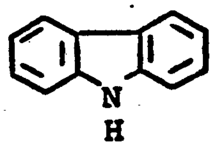 | 3 | braun |
| p-Nitrodiphenylamin 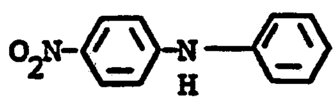 | 4 | schwarz |
| N-Phenyl-α-naphthylamin 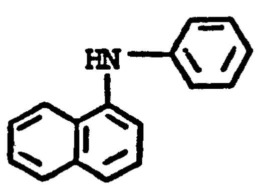 | 2 | braun |

**Tabelle II**

(Fortsetzung)

| Stabilisator | Wirksamkeitsstufe | Verfärbung |
|---|---|---|
| N-Phenyl-ß-naphthylamin<br>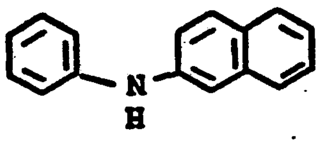 | 4 | braun |
| Diphenylamin Aceton-Kondensationsprodukt (Flexamin)<br>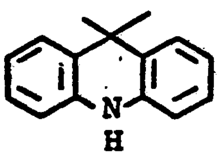 + höhermolekul. Prod. | 3-4 | braun-schwarz |
| p-Isopropylamino-diphenylamin<br>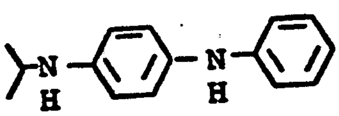 | 3 | braun |
| nach Beispiel 16 (Vgl. zu Bsp. 6) | 3-4 | nach Rot |
| o,o'-Diethyl Diphenylamin (Vgl. zu Bsp.6)<br>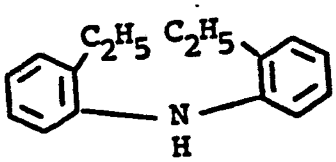 | 1-2 | wenig |

**Tabelle II**

(Fortsetzung)

| Stabilisator | Wirksamkeitsstufe | Verfärbung |
|---|---|---|
| p,p'-Dioctyl-diphenylamin 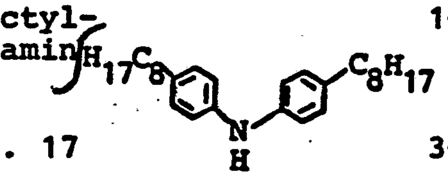 | 1-2 | prakt. keine |
| nach Bsp. 17 | 3-4 | bräunlich |

Die erfindungsgemäßen Stabilisatoren übertreffen die Verbindungen nach dem Stand der Technik in jedem Fall durch eine sehr geringe Verfärbungsneigung bei durchweg hohem Wirkungsniveau. In mehreren Fällen weisen die erfindungsgemäßen Produkte außerdem verbesserte stabilisierende Eigenschaften auf.

**Prüfung der Stabilisatorwirkung in glasfaserverstärktem Polyamid-66**

Die zu prüfenden Substanzen wurden in einer Konzentration von 0,5 % durch einen Extruderdurchgang in glasfaserverstärktes Polyamid 66 (30 % Glasfasern) eingearbeitet. Das so stabilisierte Material wurde zu Normkleinstäben verspritzt und einer Wärmealterung unter Luftzutritt bei 150 ± 1°C bzw. 120 ± 1°C unterworfen. Nach 4, 6, 8, 10 und 12 usw. Tagen wurden jeweils 8 Normkleinstäbe entnommen und nach zweistündiger Abkühlung im Exsiccator auf Schlagzähigkeit nach DIN 53 453 untersucht. Durch Auftragen dieser Rest-Schlagzähigkeiten als Funktion der Alterungszeiten erhält man eine Alterungskurve, aus der sich entnehmen läßt, nach welcher Zeit (angegeben in Tagen) ein Rest-Schlagzähigkeits-Niveau von 30 $kJ/m^2$ unterschritten wird. Diese im folgenden als Schädigungszeit $t_{30/150}$ bzw. $t_{30/120}$ bezeichneten Werte sind für eine Reihe von erfindungsgemäßen Stabilisatoren sowie von Vergleichspräparaten aus den folgenden Tabellen III und IV zu entnehmen. Die Stabilisatoren wirken daher um so besser, je höher die unter $t_{30/150}$ bzw. $t_{30/120}$ angegebene Anzahl von Tagen ist.

Tabelle III: Wirkung der erfindungsgemäßen Stabilisatoren in glasfaserverstärktem 66-Polyamid

| Stabilisator gemäß Beispiel | $t_{30/150}$ | $t_{30/120}$ | Verfärbung |
|---|---|---|---|
| 1 | 9 | 140 | prakt. keine |
| 2 | 6 | - | sehr wenig |
| 4 | 5 | - | sehr wenig |
| 5 | 6 | 70 | gelblich |
| 12 | 10 | 70 | prakt. keine |
| 13 | 12 | 70 | prakt. keine |
| 14 | - | 50 | prakt. keine |

Tabelle IV: Wirkung von Vergleichsprodukten in glasfaserverstärktem 66-Polyamid

| Stabilisator | $t_{30/150}$ | $t_{30/120}$ | Verfärbung |
|---|---|---|---|
| Flexamin (Tab. II) | 5 | 26 | dunkelbraun |
| N-Hexyl-amino-diphenylamin | 6 | 20 | dunkelbraun |
| N-Phenyl-p-nitro-anilin (Tab. II) | 4 | - | schwarz |
| ohne Stabilisator | - | 7 | keine |

Auch hier zeigt der Vergleich zwischen erfindungsgemäßen Stabilisatoren und nicht erfindungsgemäßen Diphenylaminderivaten, daß die erfindungsgemäßen Verbindungen Vorteile in bezug auf ihre Wirkung als Stabilisatoren für glasfaserverstärktes Polyamid 66 und in bezug auf Farbkonstanz bieten.

**Prüfung der Stabilisatorwirkung in glasfaserverstärktem Polyamid 6**

Die zu prüfenden Substanzen wurden in einer Konzentration von 0,5 Gew.-% durch einen Extruderdurchgang in glasfaserverstärktes Polyamid 6 (30 Gew.-% Glasfasern) eingearbeitet. Das so stabilisierte Material wurde zu Normkleinstäben verspritzt und einer Wärmealterung unter Luftzutritt bei 150 ± 1° unterworfen. Nach 4, 6, 8, 10 und 12 Tagen wurden jeweils 8 Normkleinstäbe entnommen und nach zweistündiger Abkühlung im Exsiccator auf Schlagzähigkeit nach DIN 53 453 untersucht. Durch Auftragen dieser Rest Schlagzähigkeit als Funktion der Alterungszeiten erhält man eine Alterungskurve, aus der sich entnehmen läßt, nach welcher Zeit (angegeben in Tagen) ein Rest Schlagzähigkeits-Niveau von 30 kJ/m² unterschritten wird. Diese im folgenden als Schädigungszeit $t_{30/150}$ bezeichneten Werte sind für eine Reihe von erfindungsgemäßen Stabilisatoren sowie von Vergleichspräparaten aus den folgenden Tabellen V und VI zu entnehmen.

**Tabelle V**

Wirkung der erfindungsgemäßen Stabilisatoren in Glasfaserverstärktem 6-Polyamid

| Stabilisator | $t_{30/150}$ | Verfärbung |
|---|---|---|
| 1 | 9 | prakt. keine |
| 12 | 9 | prakt. keine |
| 13 | 7 | prakt. keine |
| 14 | 9 | prakt. keine |
| 4 | 5 | leichte |
| 5 | 6 | gelbliche |

**Tabelle VI**

Wirkung von Vergleichsprodukten in Glasfaser-verstärktem 6-Polyamid

| Stabilisator | $t_{30/150}$ | Verfärbung |
|---|---|---|
| 2-Phenylamino-naphthalin 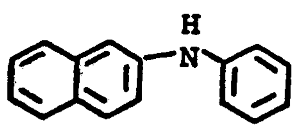 | 4 | wenig |
| N-Isopropyl-p-amino-diphenylamin 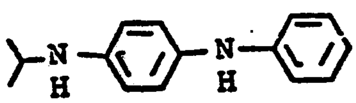 | 8 | braun |

**Tabelle VI**

(Fortsetzung)

| | | |
|---|---|---|
| N,N'-Diphenyl-p-phenylendiamin | 7 | braun |
| 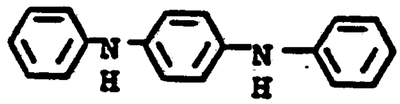 | | |
| N-Phenyl-p-nitroanilin | 9 | schwarzbraun |

Die Gegenüberstellung erfindungsgemäßer Stabilisatoren mit den als Vergleichsbeispielen aufgeführten nicht erfindungsgemäßen Diphenylaminderivaten macht die Überlegenheit der erstgenannten in Bezug auf Stabilisatorwirkung und/oder Farbveränderung deutlich.

## Patentansprüche

1. Mit Diphenylaminverbindungen stabilisierte, gegebenenfalls verstärkte Polyamide, dadurch gekennzeichnet, daß sie 0,02-5 Gew.-%, bezogen auf Polyamid, einer Diphenylaminverbindung der allgemeinen Struktur I

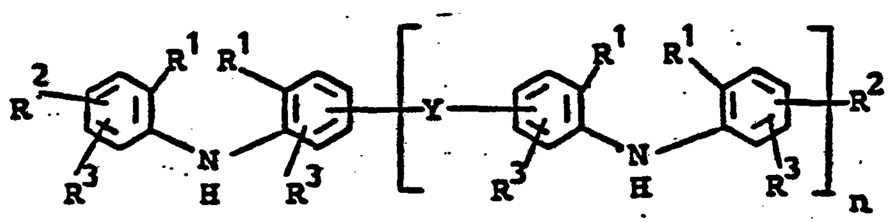 (I)

enthalten,
in der
$R^1$ und $R^3$, gleich oder verschieden, für Wasserstoff, eine $CH_3$-, $C_2H_5$- oder Isopropylgruppe und $R^3$ in o-, m- oder p-Stellung zum N-Atom steht,
$R^2$ für Wasserstoff, eine $C_4$-$C_{12}$-Alkyl-, $C_7$-$C_{12}$-Aralkyl- oder $C_5$-$C_{12}$-Cycloalkyl-gruppe und/oder einen der folgenden Reste

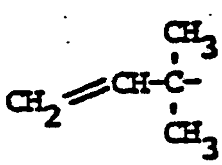, 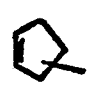, 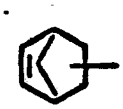, 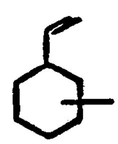, 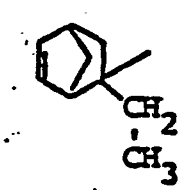

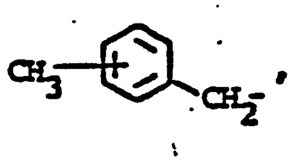, 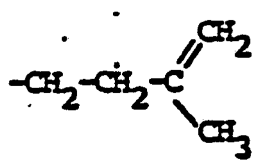, 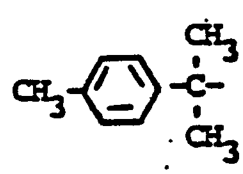,

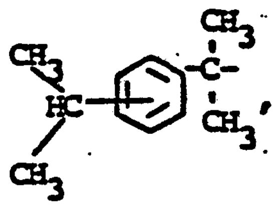, 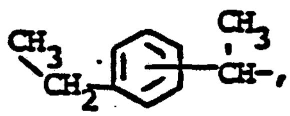, 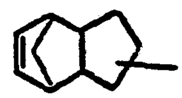, 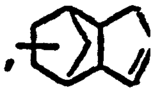

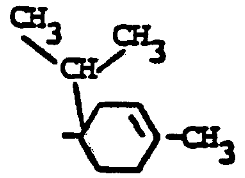, 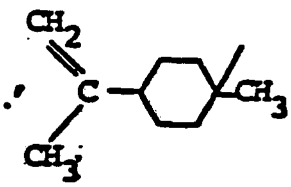, 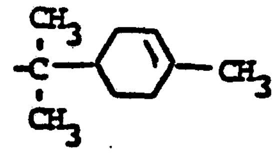

und

in o- oder p-Stellüng zur N-Atomsubstitution steht, n eine ganze Zahl von 1- 29 bedeutet und Y für einen der Reste

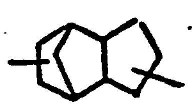; 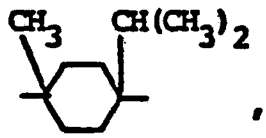, 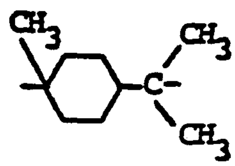,

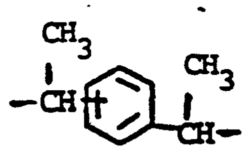, 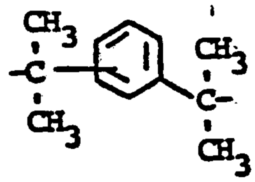, 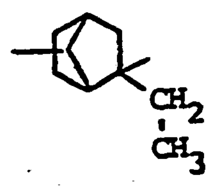

oder bis zu 50 Mol-% $-CH_2-$ steht.

2. Stabilisierte Polyamide nach Anspruch 1, dadurch gekennzeichnet, daß in der allgemeinen Formel I $R^1$ H oder $C_2H_5$, $R^3$ H, $R^2$ H, einen Benzyl-, Styryl-, α-Methylstyryl-, tert.- Butyl-, tert. Amyl-, Isononyl-, Cyclohexyl, Methylcyclohexylrest oder einen der folgenden Reste

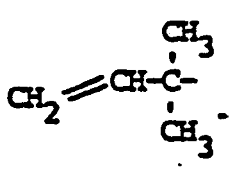, 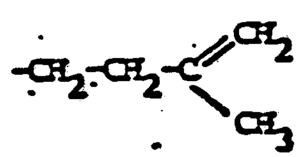, 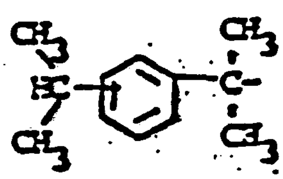,

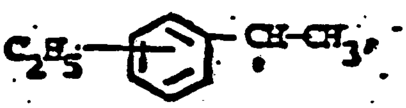, 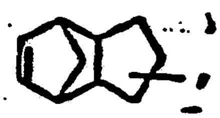, 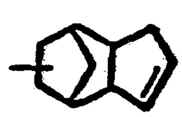, 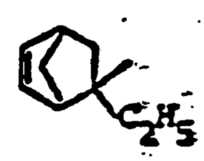

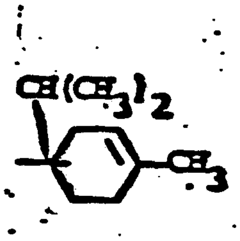, 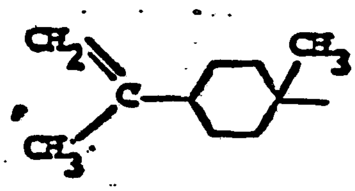 oder 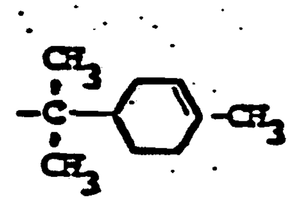,

steht und

n eine ganze Zahl von 1-19 bedeutet.

3. Stabilisierte Polyamide nach Anspruch 1 oder 2, dadurch gekennzeichnet, daß sie von 0,05-2 Gew.-% Stabilisator enthalten.

4. Stabilisierte Polyamide nach Anprüchen 1 bis 3, dadurch gekennzeichnet, daß sie 0,1-1,5 Gew.-% Stabilisator enthalten.

5. Stabilisierte Polyamide nach Anspruch 1-4, dadurch gekennzeichnet, daß die Polyamide aliphatische Polyamide sind.

6. Stabilisierte Polyamide nach Anspruch 5, dadurch gekennzeichnet, daß das Polyamid Polyamid-6 oder Polyamid-6.6 ist.

7. Stabilisierte Polyamide nach Anspruch 1 bis 6, dadurch gekennzeichnet, daß sie mit Glasfasern verstärkt sind.

**Claims**

1. Optionally reinforced polyamides which are stabilised with diphenylamine compounds, characterised in that they contain 0.02-5% by weight, based on the polyamide, of a diphenylamine compound of the general structure I

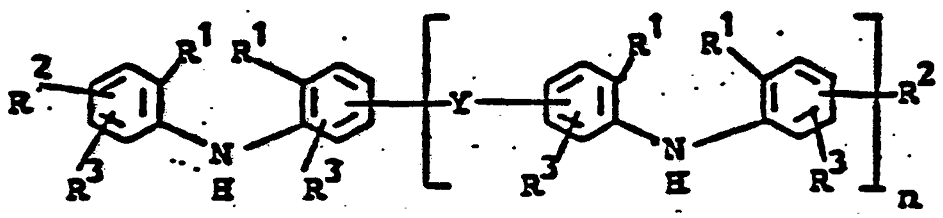 (I)

in which

$R^1$ and $R^3$ are identical or different and represent hydrogen, or a $CH_3$, $C_2H_5$ or isopropyl group and $R^3$ is in the o-, m- or p-position to the N atom,

$R^2$ represents hydrogen, a $C_4$-$C_{12}$-alkyl, $C_7$-$C_{12}$-aralkyl or $C_5$-$C_{12}$-cycloalkyl group and/or one of the following radicals

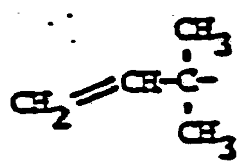 , 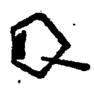 , 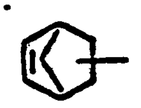 , 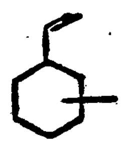 , 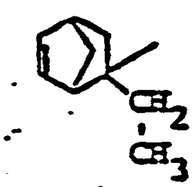

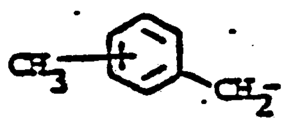 , 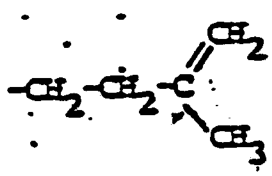 , 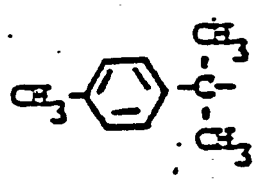 ,

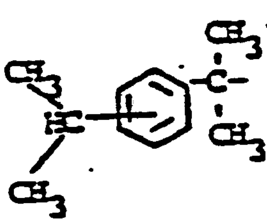 , 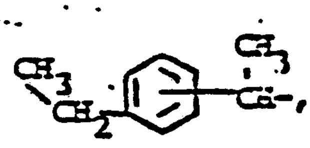 , 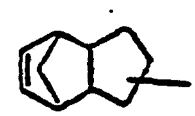 , 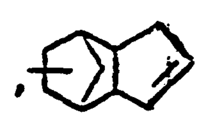

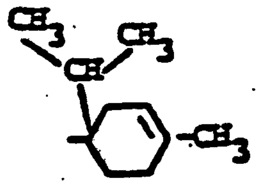;
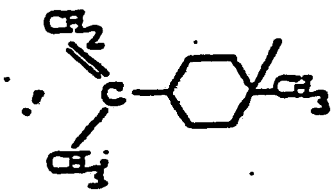,
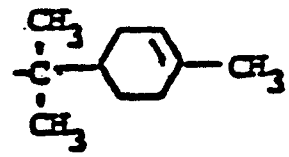

and
is in the o- or p-position to the N atom substitution,
n denotes an integer from 1-29 and
Y represents one of the radicals

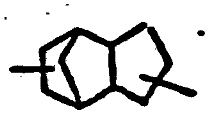;
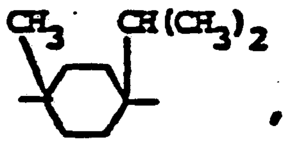,
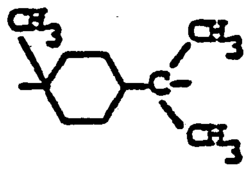

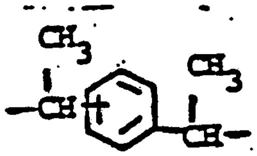,
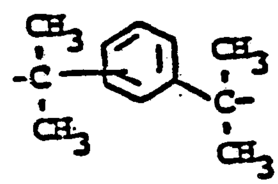,
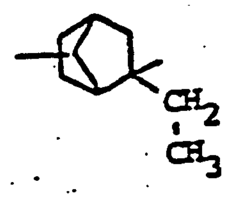

or up to 50 mol % of $-CH_2-$.
2. Stabilised polyamides according to Claim 1, characterised in that in the general formula
$R^1$ represents H or $C_2H_5$,
$R^3$ represents H,
$R^2$ represents H, a benzyl, styryl, α-methylstyryl, tert.-butyl, tert. amyl, isononyl, cyclohexyl or methylcyclohexyl radical or one of the following radicals

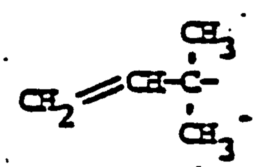,
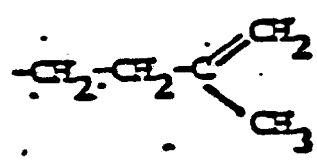,
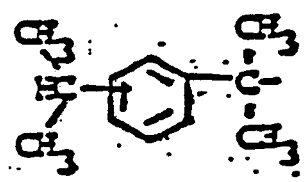,
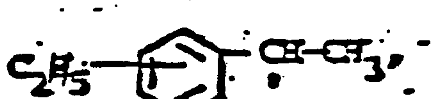,
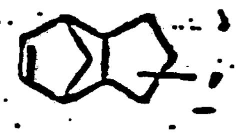,
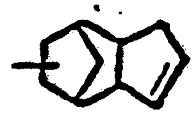,
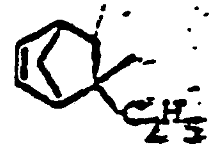

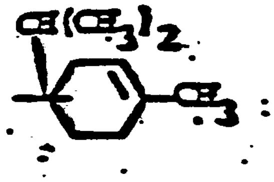 , 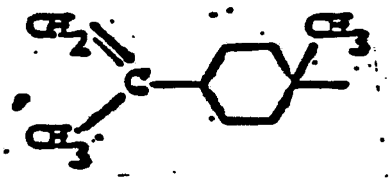 or 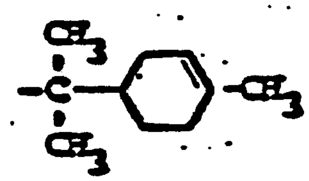

and

n denotes an integer from 1-19.

3. Stabilised polyamides according to Claim 1 or 2, characterised in that they contain from 0.05-2% by weight of the stabiliser.

4. Stabilised polyamides according to Claims 1 to 3, characterised in that they contain 0.1-1.5% by weight of the stabiliser.

5. Stabilised polyamides according to Claim 1-4, characterised in that the polyamides are aliphatic polyamides.

6. Stabilised polyamides according to Claim 5, characterised in that the polyamide is polyamide-6 or polyamide-6,6.

7. Stabilised polyamides according to Claim 1 to 6, characterised in that they are reinforced with glass fibres.

**Revendications**

1. Polyamides stabilisés par des dérivés de la diphénylamine, éventuellement renforcés, caractérisés en ce qu'ils contiennent de 0,02 à 5% en poids, par rapport au polyamide, d'un dérivé de la diphénylamine de structure générale I

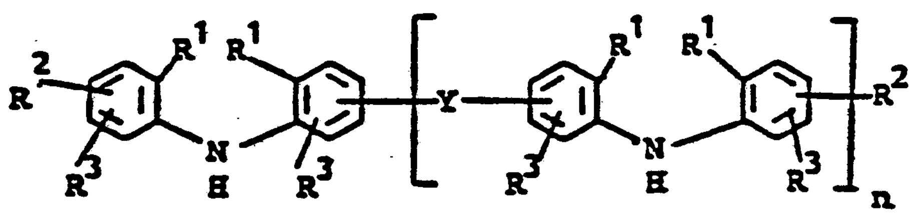 (I)

dans laquelle

$R^1$ et $R^3$, ayant des significations identiques ou différentes, représent l'hydrogène, un groupe $CH_3$, $C_2H_5$ ou isopropyle, et $R^3$ est en position ortho, méta ou para par rapport à l'atome d'azote,

$R^2$ représente l'hydrogène, un groupe alkyle en $C_4$-$C_{12}$, aralkyle en $C_7$-$C_{12}$ ou cycloalkyle en $C_5$-$C_{12}$ et/ou l'un des groupes suivants:

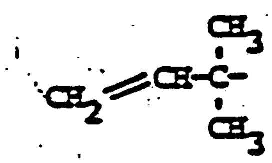, 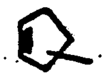, 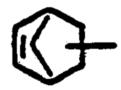, 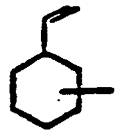, 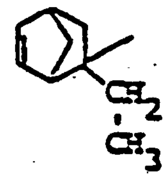

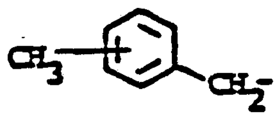, 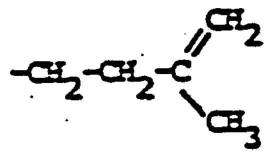, 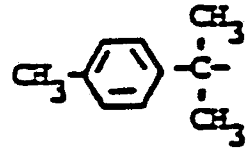,

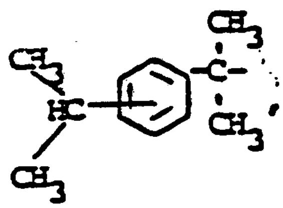, 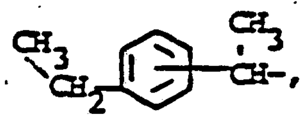, 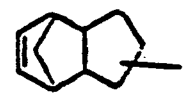, 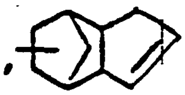

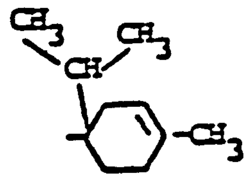, 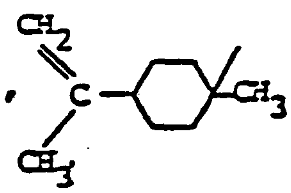, 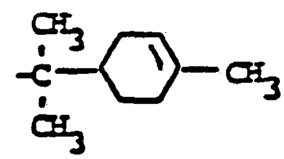

et se trouve en position ortho ou para par rapport à l'endroit de substitution par l'atome d'azote,

n est un nombre entier de 1 à 29, et

Y représente l'un des groupes

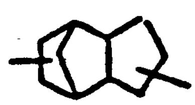, 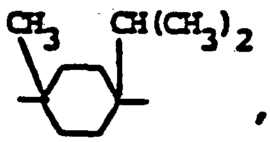, 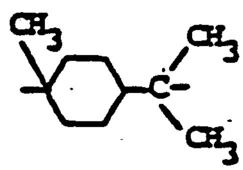

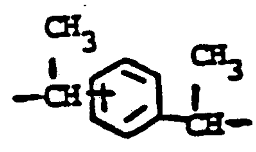, 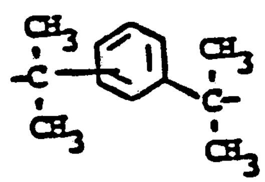, 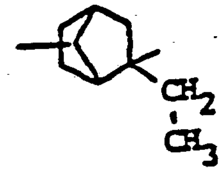

ou bien, pour une proportion allant jusqu'à 50 moles %, le groupe $-CH_2-$.

2. Polyamides stabilisés selon la revendication 1, caractérisés en ce que, dans la formule générale I, $R^1$ représente H ou $C_2H_5$, $R^3$ represente H, $R^2$ représente H, un groupe benzyle, styryle, α-méthylstyryle, tert.-butyle, tert.-amyle, isononyle, cyclohexyle, méthylcyclohexyle ou l'un des groupes suivants:

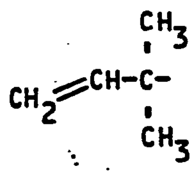 , 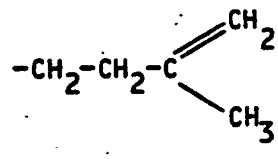 , 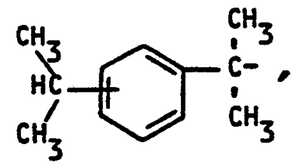 ,

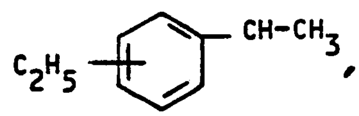 , 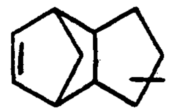 , 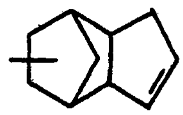 , 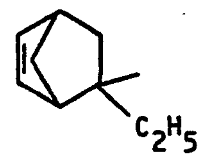

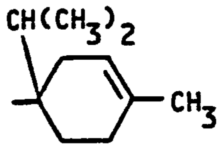 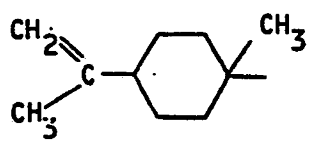 ou 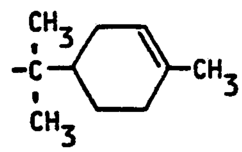

et

n est un nombre entier de 1 à 19.

3. Polyamides stabilisés selon la revendication 1 ou 2, caractérisés en ce qu'ils contiennent de 0,05 à 2% en poids de stabilisant.

4. Polyamides stabilisés selon les revendications 1 à 3, caractérisés en ce qu'ils contiennent de 0,1 à 1,5% en poids de stabilisant.

5. Polyamides stabilisés selon les revendications 1 à 4, caractérisés en ce que les polyamides sont des polyamides aliphatiques.

6. Polyamides stabilisés selon la revendication 5, caractérisés en ce que le polyamide consiste en polyamide-6 ou polyamide-6,6.

7. Polyamides stabilisés selon les revendications 1 à 6, caractérisés en ce qu'ils sont renforcés par des fibres de verre.